# FASCICULE DE BREVET EUROPEEN

(11) **EP 3 752 805 B1**
(45) Date de publication et mention de la délivrance du brevet: **10.05.2023**
(21) Numéro de dépôt: 19710454.0
(22) Date de dépôt: 14.02.2019
(51) Int. Cl.: G01J 5/04, G01J 5/20

(54) **PROCEDE DE FABRICATION D'UN MICROBOLOMETRE A MATERIAU SENSIBLE A BASE D'OXYDE DE VANADIUM**
VERFAHREN ZUR HERSTELLUNG EINES MIKROBOLOMETERS MIT EINEM EMPFINDLICHEN MATERIAL AUF VANADIUMOXIDBASIS
PROCESS FOR MANUFACTURING A MICROBOLOMETER CONTAINING VANADIUM OXIDE-BASED SENSITIVE MATERIAL

(30) Priorité: 15.02.2018 FR 1800141
(43) Date de publication de la demande: 23.12.2020
(73) Titulaire: COMMISSARIAT À L'ÉNERGIE ATOMIQUE ET AUX ÉNERGIES ALTERNATIVES, 75015 Paris (FR)
(72) Inventeur: PELENC, Denis, 38054 Grenoble cedex 09 (FR); ZUCCHI, Xavier, 38054 GRENOBLE Cedex 9 (FR); VIALLE, Claire, 38054 GRENOBLE Cedex 9 (FR); GOUDON, Valérie, 38054 GRENOBLE Cedex 9 (FR); ALIANE, Abdelkader, 38054 Grenoble cedex 09 (FR)
(74) Mandataire: INNOV-GROUP
(86) Numéro de dépôt international: PCT/FR2019/050327
(87) Numéro de publication internationale: WO 2019/158864

(56) Documents cités:
- EP-A1- 2 894 444
- WO-A1-2016/009126
- CN-A- 101 915 620
- US-A1- 2011 315 981
- US-B1- 8 329 002
- BARRY E. COLE ET AL: "Integrated vacuum packaging for low-cost lightweight uncooled microbolometer arrays", PROCEEDINGS OF SPIE, vol. 4369, 10 octobre 2001 (2001-10-10), page 235, XP055427464, US DOI: 10.1117/12.445291 ISBN: 978-1-5106-1533-5

## Description

### DOMAINE TECHNIQUE

Le domaine de l'invention est celui des dispositifs de détection d'un rayonnement électromagnétique, par exemple infrarouge ou térahertz, comportant au moins un détecteur thermique résistif comprenant un matériau sensible à base d'oxyde de vanadium. L'invention s'applique notamment au domaine de l'imagerie infrarouge et de la thermographie.

### ÉTAT DE LA TECHNIQUE ANTÉRIEURE

Un dispositif de détection de rayonnement électromagnétique peut comporter une matrice de détecteurs thermiques résistifs, également appelés microbolomètres, chaque microbolomètre comportant une portion absorbante apte à absorber le rayonnement électromagnétique à détecter.

Dans le but d'assurer l'isolation thermique du matériau sensible des microbolomètres, les portions absorbantes se présentent habituellement sous la forme de membranes suspendues au-dessus du substrat par des piliers d'ancrage, et sont isolées thermiquement de celui-ci par des bras de maintien et d'isolation thermique. Ces piliers d'ancrage et bras d'isolation thermique présentent également une fonction électrique en reliant électriquement les membranes suspendues à un circuit de lecture généralement disposé dans le substrat.

La membrane absorbante comporte un matériau sensible dont la résistivité électrique ρ varie en fonction de la température du matériau. Le matériau sensible est caractérisé par la valeur ρₐ de la résistivité électrique à température ambiante ainsi que par son coefficient α (ou TCR), lequel est défini par la relation α = 1/ρ × dρ/dT. Le matériau sensible peut être un matériau semiconducteur choisi habituellement parmi le silicium amorphe et un oxyde de vanadium VOₓ.

Le choix du matériau sensible dépend notamment de sa compatibilité avec les étapes classiques de dépôt et de gravure habituellement utilisées dans la microélectronique, et notamment dans la technologie silicium. Cependant, il apparaît qu'un matériau sensible à base d'oxyde de vanadium est susceptible de voir ses propriétés électriques dégradées à la suite du procédé de fabrication du microbolomètre.

Le brevet US 8329002 B1 décrit la fabrication de films bolométriques comportant un matériau sensible à base d'oxyde de vanadium et de carbone.

### EXPOSÉ DE L'INVENTION

L'invention a pour objectif de remédier au moins en partie aux inconvénients de l'art antérieur, et plus particulièrement de proposer un procédé de fabrication d'au moins un microbolomètre comportant un matériau sensible à base d'oxyde de vanadium dont les propriétés électriques sont préservées au cours du procédé de fabrication, et plus précisément dont les risques de dégradation du bruit en 1/f du matériau sensible, à la suite du procédé de fabrication, sont limités voire écartés.

Pour cela, l'objet de l'invention est un procédé de fabrication d'au moins un microbolomètre comportant un matériau sensible permettant d'au moins limiter une dégradation d'un bruit dudit matériau sensible,
- le matériau sensible étant formé d'un premier composé à base d'oxyde de vanadium, et d'au moins un élément chimique additionnel choisi parmi le bore, le carbone, à l'exception de l'azote,
- le procédé comportant les étapes suivantes :
   o une étape de réalisation du matériau sensible en couche mince ;
   o une étape d'exposition du matériau sensible à une température Tᵣ supérieure à la température ambiante, pendant une durée Δtᵣ, cette étape d'exposition thermique étant effectuée ultérieurement à l'étape de réalisation du matériau sensible,
      ▪ la température Tᵣ et la durée Δtᵣ étant telles que ledit premier composé, étant amorphe et présentant une valeur native de résistivité électrique à température ambiante comprise entre 1 Ω.cm et 30 Ω.cm, ayant subi une étape d'exposition à la température Tᵣ pendant la durée Δtᵣ, présente une résistivité électrique à température ambiante inférieure à 50% de sa valeur native ;
- le procédé comportant en outre les étapes suivantes :
   i. détermination d'une quantité dite efficace non nulle de l'élément chimique additionnel ajouté audit premier composé, formant ainsi un composé modifié, à partir de laquelle le composé modifié, ayant subi une étape d'exposition à la température Tᵣ pendant la durée Δtᵣ, présente une résistivité électrique ρ_{a|r} à température ambiante, supérieure ou égale à 50% de la valeur native ρₐ dudit matériau sensible à température ambiante ;
   ii. lors de ladite étape de réalisation du matériau sensible en couche mince, celui-ci est formé dudit composé modifié ayant une quantité de l'élément chimique additionnel supérieure ou égale à la quantité efficace préalablement déterminée, le matériau sensible étant amorphe, présentant une valeur native ρₐ de résistivité électrique à température ambiante comprise entre 1 Ω.cm et 30 Ω.cm, et une composition chimique homogène ;
   iii. de sorte que, à la suite de ladite étape d'exposition du matériau sensible à la température Tᵣ pendant la durée Δtᵣ, ledit matériau sensible (15) présentant alors un bruit dont la dégradation a été au moins limitée.

Certains aspects préférés, mais non limitatifs de ce procédé de fabrication sont les suivants.

Le procédé de fabrication peut comporter une étape préalable de détermination de la valeur native ρₐ de la résistivité électrique à température ambiante du matériau sensible contenant la quantité non nulle considérée de l'élément chimique additionnel. Il peut également comporter une étape préalable de détermination de la valeur native de la résistivité électrique à température ambiante du premier composé.

L'étape d'exposition du matériau sensible peut comprendre une étape de dépôt d'une couche de protection recouvrant le matériau sensible.

L'étape d'exposition du matériau sensible peut comprendre une étape de dépôt d'une couche d'encapsulation transparente au rayonnement électromagnétique à détecter destinée à définir une cavité dans laquelle est situé le microbolomètre.

La température Tᵣ peut être supérieure ou égale à 280°C, voire égale à 310°C à 5°C près.

La durée Δtᵣ peut être supérieure ou égale à 90min.

Le matériau sensible peut être réalisé à une température inférieure à la température Tᵣ, par exemple à température ambiante.

L'invention porte également sur un microbolomètre comportant un matériau sensible en un premier composé à base d'oxyde de vanadium et en au moins un élément chimique additionnel choisi parmi le bore et le carbone, à l'exception de l'azote. Le matériau sensible :
∘ est amorphe,
∘ présente une résistivité électrique à température ambiante comprise entre 1 Ω.cm et 30 Ω.cm,
∘ une composition chimique homogène, et
∘ une quantité de bore, définie comme le rapport du nombre d'atomes de bore sur celui de vanadium, au moins égale à 0.086, et/ou une quantité de carbone, définie comme le rapport du nombre d'atomes de carbone sur celui de vanadium, au moins égale à 0.063.

La quantité de bore peut ainsi être au moins égale à 0.086, voire au moins égale à 0.097. Selon un mode de réalisation, l'étape de réalisation du matériau sensible peut comporter une implantation de bore dans le premier composé chimique préalablement obtenu. La quantité de bore dans le matériau sensible est alors de préférence au moins égale à 0.097. En variante, selon un autre mode de réalisation, l'étape de réalisation du matériau sensible peut comporter une pulvérisation d'une cible alliée vanadium-bore avec une quantité de bore telle que la quantité de bore dans le matériau sensible est de préférence au moins égale à 0.086.

La quantité d'oxygène, définie comme le rapport du nombre d'atomes d'oxygène sur celui de vanadium, est de préférence comprise entre 1.42 et 1.94, à plus ou moins 0.05 près. Par ailleurs, la résistivité électrique à température ambiante du matériau sensible peut être comprise entre 2 Ω.cm et 30 Ω.cm, et sa quantité d'oxygène peut alors être comprise entre 1.56 et 1.94, à 0.05 près.

Le matériau sensible peut être recouvert par une couche de protection en nitrure de silicium.

L'invention porte également sur un dispositif de détection d'un rayonnement électromagnétique, comportant une matrice de microbolomètres selon l'une quelconque des caractéristiques précédentes.

Les microbolomètres peuvent être disposés dans au moins une cavité hermétique délimitée par une structure d'encapsulation transparente au rayonnement électromagnétique à détecter, la structure d'encapsulation comportant au moins une couche réalisée en silicium amorphe.

Le dispositif de détection peut comporter un matériau getter situé dans la cavité hermétique.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
les figures 1A et 1B sont des vues schématiques et partielles, respectivement en perspective et en coupe suivant le plan A-A, d'un microbolomètre selon un mode de réalisation, comportant un matériau sensible à base d'oxyde de vanadium ;
les figures 2A à 2C illustrent, respectivement :
   o un exemple d'évolution de la résistivité électrique à température ambiante d'un composé de base réalisé à partir d'oxyde de vanadium, ne contenant pas de bore et/ou de carbone, en fonction d'une température Tᵣ d'exposition thermique ;
   o un exemple de valeurs du coefficient TCR pour des composés de base VOₓ en fonction de leur résistivité électrique, sans exposition thermique, et après exposition thermique à 310°C pendant 90min ;
   o un exemple de valeurs d'un paramètre représentatif du bruit en 1/f pour des composés de base VOₓ en fonction de leur résistivité électrique, sans exposition thermique, et après exposition thermique à 310°C pendant 90min ;

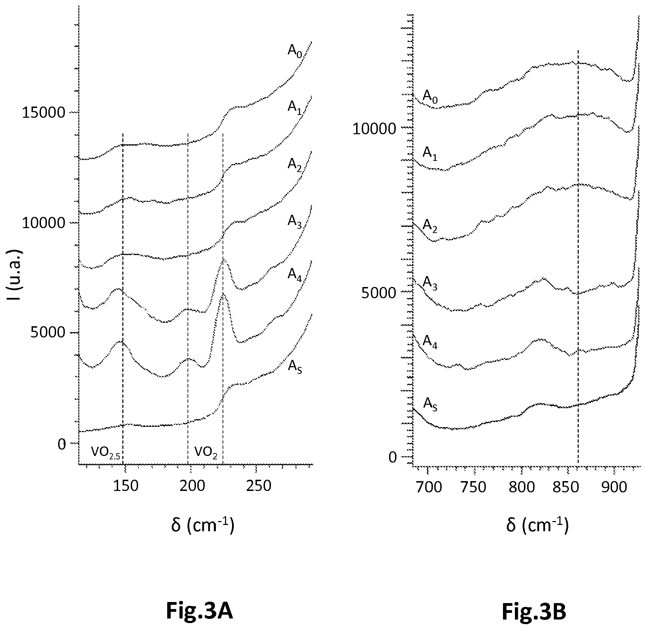

les figures 3A et 3B sont des exemples de spectres Raman pour des composés de base VOₓ sans exposition thermique, et après exposition thermique pendant 90min à différentes températures ;

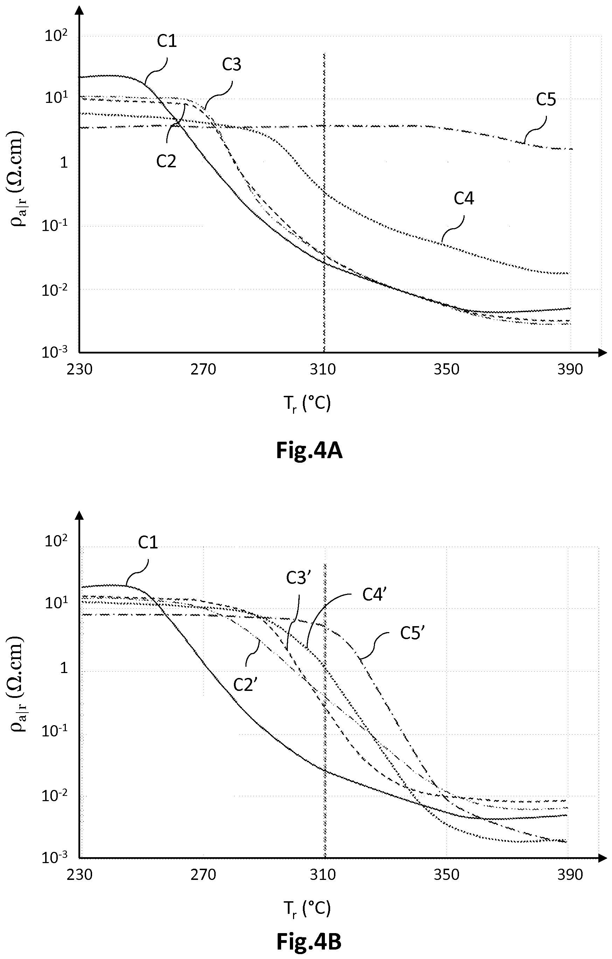

la figure 4A et 4B sont des graphes illustrant l'évolution de la résistivité électrique ρ_{a|r} à température ambiante du matériau sensible à base d'oxyde de vanadium, après exposition dudit matériau à une température Tᵣ pendant une durée Δtᵣ, pour différentes quantités d'un élément chimique additionnel, ce dernier étant le bore (fig.4A), le carbone (fig.4B).

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, de préférence à 5% près, et, en ce qui concerne les températures, à 10°C près et de préférence à 5°C près. Par ailleurs, l'expression « comportant un » doit être comprise comme « comportant au moins un », sauf indication contraire.

Les indications relatives à la composition chimique d'un composé sont exprimées par sa formule chimique brute, exprimée conventionnellement par rapport à un (1) atome de vanadium. Ainsi, pour un composé VOₓB_{y}, mentionné ici à titre purement illustratif, la valeur x de la quantité d'oxygène est le nombre d'atomes d'oxygène pour 1 atome de vanadium, et la valeur y de la quantité de bore est le nombre d'atomes de bore pour 1 atome de vanadium. La valeur de la quantité de l'élément chimique est donnée à 10% près. Par ailleurs, la proportion atomique de chaque élément chimique dans le composé VOₓB_{y} est de 1/(1+x+y) pour le vanadium, de x/(1+x+y) pour l'oxygène, et de y/(1+x+y) pour le bore.

L'invention porte notamment sur un procédé de fabrication d'au moins un détecteur thermique résistif, également appelé microbolomètre, comportant un matériau sensible à base d'oxyde de vanadium VOₓ. Le microbolomètre peut être adapté à détecter un rayonnement infrarouge ou térahertz. Le matériau sensible comporte une quantité suffisante non nulle d'au moins un élément chimique additionnel choisi parmi le bore B, le carbone C, à l'exception de l'azote N. De plus, le procédé de fabrication met en oeuvre au moins une étape dans laquelle le matériau sensible est exposé à une température supérieure à la température ambiante et inférieure ou égale à la température Tᵣ, pendant une durée inférieure ou égale à Δtᵣ, par exemple à 300°C pendant 10min, 30min, voire 90min ou davantage. La température Tᵣ d'exposition thermique est donc supérieure à la température ambiante.

Cette étape d'exposition thermique peut correspondre au dépôt à 300°C environ d'une couche de protection, par exemple réalisée en un nitrure de silicium SiN ou en un oxyde de silicium SiO, recouvrant le matériau sensible dans le but de le protéger de toute contamination ultérieure par des éléments chimiques éventuellement présents. Elle peut également correspondre à la réalisation d'une couche d'encapsulation en silicium amorphe, ladite couche étant destinée à définir une cavité hermétique dans laquelle est situé le microbolomètre. Il peut également s'agir d'une activation à 300°C environ d'un matériau getter situé dans la cavité hermétique, ce matériau getter étant destiné à réagir avec du gaz résiduel éventuellement présent dans la cavité pour maintenir celle-ci à un niveau de vide suffisant.

Ces exemples sont donnés à titre illustratif. L'étape d'exposition thermique à la température Tᵣ pendant la durée Δtᵣ peut être mise en oeuvre, d'une manière générale, dans le cadre d'étapes technologiques de fabrication du microbolomètre effectuées après la réalisation du matériau sensible, voire dans le cadre d'étapes technologiques de fabrication du dispositif de détection après la réalisation du ou des microbolomètres, notamment pour l'intégration de fonctionnalités additionnelles au niveau de la puce de détection.

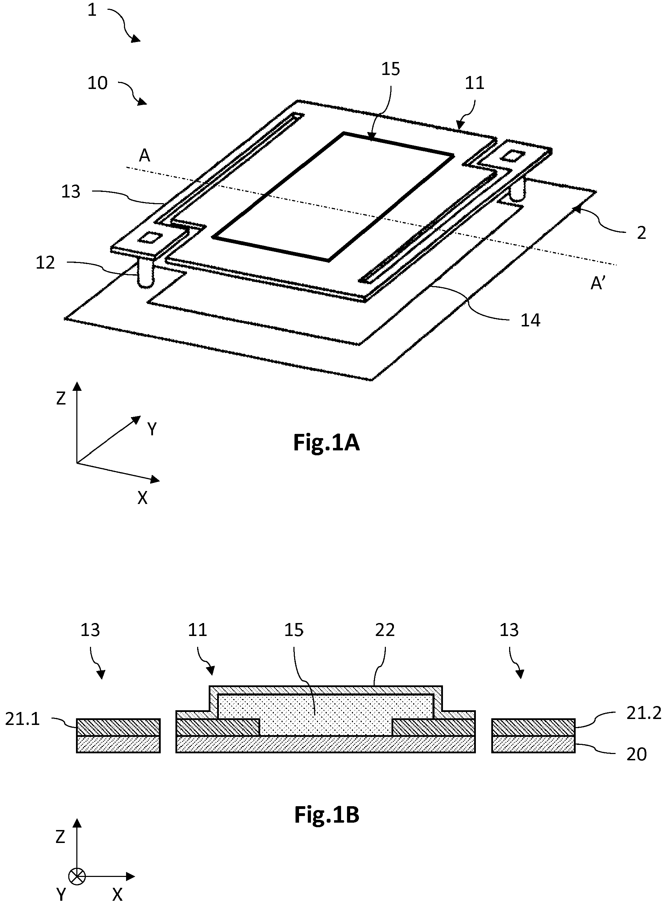

Les figures 1A et 1B sont des vues schématiques et partielles, respectivement en perspective et en coupe suivant le plan A-A, d'un microbolomètre 10 d'un dispositif de détection 1 d'un rayonnement électromagnétique, le microbolomètre 10 comportant un matériau sensible 15 à base d'oxyde de vanadium VOₓ.

Le microbolomètre 10 comporte une membrane absorbante 11 à matériau sensible 15 à base d'oxyde de vanadium VOₓ, suspendue au-dessus d'un substrat 2 par des piliers d'ancrage 12 et des bras d'isolation thermique 13, ainsi qu'un circuit électronique de commande et de lecture (non représenté) situé dans le substrat 2. Le microbolomètre 10 est ici adapté à absorber un rayonnement infrarouge compris dans la bande de longueurs d'onde infrarouges longues (dite LWIR), allant de 8µm à 14µm environ.

On définit ici et pour la suite de la description un repère direct tridimensionnel orthogonal (X,Y,Z), où le plan XY est sensiblement parallèle au plan d'un substrat 2, l'axe Z étant orienté suivant une direction sensiblement orthogonale au plan du substrat 2. Par ailleurs, les termes « inférieur » et « supérieur » s'entendent comme étant relatifs à un positionnement croissant lorsqu'on s'éloigne du substrat 2 suivant la direction +Z.

Le microbolomètre 10 comporte un substrat 2, réalisé dans cet exemple à base de silicium, comportant un circuit électronique (non représenté) permettant la commande et la lecture du microbolomètre. Le circuit électronique comporte des portions de lignes conductrices, par exemple métalliques, séparées les unes des autres par un matériau diélectrique, par exemple un matériau minéral à base de silicium tel qu'un oxyde de silicium SiO, un nitrure de silicium SiN, ou leurs alliages. Il peut comporter à cet effet des éléments électroniques actifs, par exemple des diodes, transistors, condensateurs, résistances..., connectés par des interconnexions électriques au microbolomètre 10 d'une part, et à un plot d'interconnexion (non représenté) d'autre part, ce dernier étant destiné à relier électriquement le dispositif de détection 1 à un dispositif électronique externe.

La face supérieure du substrat 2 peut être revêtue d'une couche de protection (non représentée) notamment lorsque la membrane absorbante est réalisée sur une couche sacrificielle minérale, laquelle est ensuite éliminée par attaque chimique en milieu acide. Elle peut recouvrir ou être recouverte par une couche réflectrice 14 disposée sous la membrane absorbante 11. Lorsqu'elle revêt la couche réflectrice 14, elle est réalisée en un matériau au moins partiellement transparent au rayonnement électromagnétique à détecter. La couche de protection présente une fonction d'arrêt de gravure, et est adaptée à assurer une protection du substrat et des couches diélectriques inter-métal lorsqu'elles sont réalisées en un matériau minéral vis-à-vis d'une attaque chimique, par exemple une attaque chimique en milieu acide HF (acide fluorhydrique) mise en oeuvre ultérieurement pour graver la couche sacrificielle minérale utilisée lors de la réalisation de la membrane absorbante. Cette couche de protection forme ainsi une couche hermétique et chimiquement inerte. Elle est électriquement isolante pour éviter tout court-circuit entre les portions de ligne métallique. Elle peut ainsi être réalisée en alumine Al₂O₃, voire en nitrure ou fluorure d'aluminium. Elle peut présenter une épaisseur comprise entre quelques dizaines et quelques centaines de nanomètres, par exemple comprise entre 10nm et 500nm, de préférence comprise entre 10nm et 30nm.

Le microbolomètre 10 comporte une membrane absorbante 11 intégrant un matériau sensible 15 à base d'oxyde de vanadium VOₓ, suspendue au-dessus du substrat 2 par des piliers d'ancrage 12 et des bras d'isolation thermique 13. Les piliers d'ancrage 12 sont électriquement conducteurs, et traversent localement la couche de protection pour assurer un contact électrique avec le circuit électronique. La membrane absorbante 11 est espacée du substrat 2, et en particulier de la couche réflectrice 14, d'une distance non nulle. Cette distance est de préférence ajustée de manière à former une cavité quart d'onde optimisant l'absorption du rayonnement électromagnétique à détecter par la membrane suspendue 11.

Comme l'illustre la fig.1B, la membrane absorbante 11 peut comporter une couche inférieure de support 20 réalisée en un matériau électriquement isolant sur laquelle reposent deux électrodes 21.1, 21.2 distinctes l'une de l'autre, réalisées par exemple en TiN qui présente une forte absorption du rayonnement infrarouge. Une couche mince du matériau sensible 15 repose sur la couche support 20 et vient au contact de chacune des deux électrodes 21.1, 21.2. Le matériau sensible 15 est ici recouvert d'une couche de protection 22, réalisée par exemple en un nitrure de silicium SiN ou un oxyde de silicium SiO, laquelle permet d'éviter toute contamination ultérieure du matériau sensible 15. Cet exemple est donné à titre purement illustratif et d'autres agencements des électrodes et du matériau sensible sont possibles.

Par ailleurs, le microbolomètre 10 peut être situé dans une cavité hermétique définie par une structure d'encapsulation (non représentée), comme le décrit notamment la publication de Dumont et al. intitulé Current progress on pixel level packaging for uncooled IRFPA, SPIE Proceedings Vol.8353 (2012). La structure d'encapsulation peut être formée d'un empilement de différentes couches minces, telles qu'une couche d'encapsulation par exemple réalisée en silicium amorphe déposé par CVD ou iPVD, recouverte d'une couche de scellement et d'antireflet, par exemple réalisée en différentes sous-couches de germanium et de sulfure de zinc, déposées par exemple par EBPVD, IBS ou autre. Une telle structure d'encapsulation est notamment décrite dans la demande de brevet EP3067675.

Le matériau sensible 15 est à base d'oxyde de vanadium VOₓ, c'est-à-dire qu'il est formé d'un composé dit de base réalisé à partir d'oxyde de vanadium VOₓ dans lequel a été ajouté au moins un élément chimique additionnel choisi parmi le bore B, le carbone C, à l'exception de l'azote N. Le matériau sensible 15 ne comporte donc pas d'azote : la quantité d'azote dans le matériau sensible 15 est donc nulle ou quasi-nulle, c'est-à-dire est inférieure ou égale à 0.1% en proportion atomique. L'élément chimique additionnel B, C est défini comme un élément chimique ajouté volontairement au composé de base qu'est l'oxyde de vanadium. Le matériau sensible 15 est amorphe, c'est-à-dire qu'il ne contient sensiblement pas de phases cristallines. Par ailleurs, il présente une résistivité électrique comprise entre 1 Ω.cm et 30 Ω.cm, ce qui correspond à une quantité d'oxygène x, définie comme le rapport entre le nombre d'atomes d'oxygène sur le nombre d'atomes de vanadium, comprise entre 1.42 et 1.94 à plus ou moins 0.05 près. De plus, il présente une composition chimique homogène, c'est-à-dire que sa composition chimique telle qu'elle est définie dans un volume élémentaire de l'ordre de 3nm de diamètre est invariante à grande échelle (dans au moins 90%, 95%, voire 99% de son volume).

Le composé de base est amorphe et est réalisé à base de VOₓ avec x compris entre 1.42 et 1.94, à plus ou moins 0.05 près, et de préférence compris entre 1.56 et 1.94, à 0.05 près. Il ne présente pas une forme stoechiométrique. Il se distingue ainsi des composés stoechiométriques du type VO₂, le V₂O₅, le V₃O₅, voire peut présenter une autre valeur du rapport stoechiométrique du nombre d'atomes d'oxygène sur le nombre d'atomes de vanadium. Comme précisé précédemment, le composé de formule chimique brute V₂O₅ comporte ici 5 atomes d'oxygène pour 2 atomes de vanadium (x=5/2), et le composé V₃O₅ comporte 5 atomes d'oxygène pour 3 atomes de vanadium (x=5/3). Notons ici que le composé stoechiométrique V₃O₅ est un composé qui ne peut être obtenu dans les conditions de réalisation usuelles d'un tel composé de base VOₓ de microbolomètre (température habituellement inférieure au budget thermique maximal du circuit de lecture situé dans le substrat 2, i.e. inférieure à 400°C). Aussi, le matériau sensible VOₓ selon l'invention peut présenter une quantité x égale à 1.67 sans pour autant qu'il corresponde à la forme stoechiométrique V₃O₅. Par ailleurs, en ce qui concerne le composé stoechiométrique V₂O₃, la probabilité est quasi nulle qu'un tel composé de base, c'est-à-dire amorphe et présentant une résistivité électrique comprise entre 1 Ω.cm et 30 Ω.cm environ, puisse former après recuit à la température Tᵣ une unique phase cristalline stoechiométrique V₂O₃. Aussi, même pour un composé de base amorphe ayant une quantité d'oxygène à 1.5 environ, donc à 0.05 près, plusieurs phases cristallines stoechiométriques différentes par leur quantité d'oxygène sont donc susceptibles d'être formées après recuit à Tᵣ, dont la phase cristalline V₂O₃. Quoi qu'il en soit, dans le cas où la quantité d'oxygène du composé de base amorphe est comprise entre 1.56 et 1.94, à 0.05 près, une unique phase cristalline stoechiométrique V₂O₃ ne peut se former après recuit à Tᵣ. Notons par ailleurs que, dans le cas où le composé de base ou le matériau sensible présente une quantité d'oxygène x comprise entre 1.56 et 1.94, à 0.05 près, la résistivité électrique native est alors comprise entre 2 Ω.cm et 30 Ω.cm environ.

Le matériau sensible 15 correspond alors à un composé modifié, c'est-à-dire qu'il correspond au composé de base qui a été modifié par l'addition au moins un élément chimique choisi parmi le bore B et le carbone C.

La quantité d'élément chimique additionnel B, C, à savoir le nombre d'atomes de bore et/ou de carbone sur celui de vanadium, est choisie de manière à conférer au matériau sensible, lequel a été exposé à la température Tᵣ pendant la durée Δtᵣ, une résistivité électrique ρ_{a|r} à température ambiante au moins égale à 50% de sa valeur native ρₐ. Par au moins égal, on entend supérieur ou égal. La valeur native ρₐ de la résistivité électrique est celle du matériau sensible avant qu'il ait été exposé à la température Tᵣ pendant Δtᵣ.

Les valeurs de la température Tᵣ et de la durée Δtᵣ sont telles que le premier composé à base de VOₓ (sans l'élément chimique additionnel) présente une résistivité électrique à température ambiante inférieure à 50% de sa valeur native. Il s'agit de valeurs de température et de durée de l'exposition thermique à laquelle le matériau sensible 15 sera soumis lors des étapes ultérieures de fabrication du microbolomètre.

La quantité d'élément chimique additionnel B, C est alors supérieure ou égale à une valeur dite efficace, ou quantité efficace. La quantité efficace est la quantité minimale, non nulle, de l'élément chimique additionnel B, C à partir de laquelle le matériau sensible, ayant subi une étape d'exposition à la température Tᵣ pendant la durée Δtᵣ, présente une résistivité électrique ρ_{a|r} à température ambiante, au moins égale à 50% de la valeur native ρₐ dudit matériau sensible à température ambiante. La température ambiante peut être égale à 30°C. La température Tᵣ est supérieure à la température ambiante, et est de préférence supérieure ou égale à 280°C, et de préférence supérieure ou égale à 300°C. Elle peut être inférieure ou égale à 400°C. La durée Δtᵣ est de préférence supérieure ou égale à quelques minutes ou dizaines de minutes, voire à quelques heures.

Autrement dit, lorsque le matériau sensible, dont la quantité de bore et/ou de carbone est supérieure ou égale à la quantité efficace, n'a pas été exposé à la température Tᵣ pendant la durée Δtᵣ, sa résistivité électrique à température ambiante présente la valeur native ρₐ. Après exposition thermique à Tᵣ pendant Δtᵣ, le matériau sensible présente alors une résistivité électrique ρ_{a|r} à température ambiante au moins égale à 50% de la valeur native ρₐ.

La quantité efficace dépend notamment du composé de base considéré, ainsi que des valeurs choisies de la température Tᵣ et de la durée Δtᵣ de l'exposition thermique. L'homme du métier est à même de déterminer la quantité efficace, c'est-à-dire la quantité minimale de bore et/ou de carbone, à ajouter au composé de base pour que le matériau sensible présente une résistance électrique ρ_{a|r} à température ambiante au moins égale à 50% de la valeur native ρₐ. La quantité efficace peut être choisie, le cas échéant, de sorte que la valeur ρ_{a|r} soit supérieure à 50%, par exemple au moins égale à 75%, voire au moins égale à 90% de la valeur native ρₐ.

La résistivité électrique à température ambiante du matériau sensible peut être déterminée par une technique de mesure conventionnelle à quatre pointes, et la composition atomique du matériau sensible, et partant, la quantité de l'élément chimique additionnel, peut être notamment déterminée par NRA (*Nuclear Reaction Analysis*), par RBS (*Rutherford Backscattering Spectroscopy*), par SIMS (*Secondary Ion Mass Spectrometry*), par XPS (*X-ray Photoelectron Spectroscopy*), en utilisant les étalons adaptés.

Il est connu que la résistivité électrique à température ambiante d'un matériau sensible constitué d'oxyde de vanadium VOₓ peut présenter une chute de sa valeur lorsqu'il a été exposé à une température de 300°C ou de 400°C, en particulier sous atmosphère inerte (sous azote), comme le décrit la publication de Venkatasubramanian et al. intitulée Correlation of température response and structure of annealed VOx thin films for IR detector applications, J. Vac. Sci. Technol. A 27(4), 2009, 956-961. Ainsi, un matériau sensible constitué d'oxyde de vanadium, donc sans élément chimique additionnel tel que le bore et le carbone, présente une résistivité électrique ρ_{a|r} à température ambiante du même ordre de grandeur que sa valeur native ρₐ après exposition à une température de l'ordre de 200°C sous atmosphère inerte. Cependant, la résistivité électrique ρ_{a|r} chute d'un ordre de grandeur, voire de plusieurs ordres de grandeur, lorsque le matériau sensible a été exposé à une température de 300°C ou de 400°C pendant 10min ou 30min sous atmosphère inerte.

Cependant, les inventeurs ont constaté que l'addition, dans un matériau sensible à base d'oxyde de vanadium, d'une quantité suffisante d'au moins un élément chimique additionnel choisi parmi le bore et le carbone, permet d'améliorer, de manière surprenante, la stabilité thermique du matériau sensible lors d'une exposition thermique à des températures élevées, par exemple de l'ordre de 300°C voire davantage, pendant plusieurs dizaines de minutes, et plus précisément de limiter voire écarter une éventuelle dégradation du bruit en 1/f du matériau sensible à la suite de l'étape d'exposition thermique.

Le matériau sensible à base d'oxyde de vanadium, avec addition suffisante d'un ou plusieurs des éléments chimiques additionnels mentionnés précédemment, présente alors une résistivité électrique ρ_{a|r} à température ambiante au moins égale à 50% de la valeur native ρₐ. La quantité suffisante de bore et/ou de carbone est une quantité supérieure ou égale à la quantité efficace déterminée Un tel matériau sensible ne présente alors pas de dégradation significative de ses propriétés électriques, et notamment de dégradation de sa résistivité électrique à température ambiante et de son bruit en 1/f, à la suite du procédé de fabrication du microbolomètre qui comporte au moins une étape d'exposition du matériau sensible à Tᵣ pendant Δtᵣ, comme des étapes de dépôt de couches minces, d'encapsulation du microbolomètre dans une cavité hermétique, voire d'activation d'un matériau getter.

Plus précisément, il apparaît qu'une exposition d'un composé à base de VOₓ, lorsqu'il est amorphe et présente une résistivité électrique native ρₐ à température ambiante comprise entre 1 Ω.cm et 30 Ω.cm, à une température Tᵣ pendant une durée Δtᵣ telles que sa résistivité électrique ρ_{a|r} chute par rapport à sa valeur native ρₐ, provoque également une dégradation du bruit en 1/f, sans pour autant que le coefficient TCR soit affecté. Rappelons que le bruit en 1/f, également appelé bruit de flicker ou bruit basse fréquence, provient notamment des fluctuations de mobilité et/ou de densité des porteurs libres.

Par ailleurs, un composé amorphe à base d'un oxyde de vanadium VOₓ, pour lequel la résistivité électrique est comprise entre 1 Ω.cm et 30 Ω.cm, n'est pas susceptible de former une phase cristalline stoechiométrique unique, après recuit à Tᵣ, dans les conditions usuelles de réalisation d'un tel composé de base VOₓ d'un microbolomètre (température inférieure à 400°C). Dans une telle gamme de résistivité électrique, le composé de base présente une quantité d'oxygène x de l'ordre de 1.42 à 1.94 environ. Par environ, on entend ici que l'incertitude absolue est de ±0.05. Comme indiqué précédemment, la résistivité électrique du composé de base peut être comprise entre 2 Ω.cm et 30 Ω.cm, sa quantité d'oxygène x étant alors comprise entre 1.56 et 1.94, à 0.05 près.

Les inventeurs ont constaté que l'évolution du bruit en 1/f d'un tel composé de base en fonction de la température Tᵣ d'exposition thermique pour une durée Δtᵣ donnée est corrélée à celle de la résistivité électrique, mais ne l'est pas à celle du coefficient TCR.

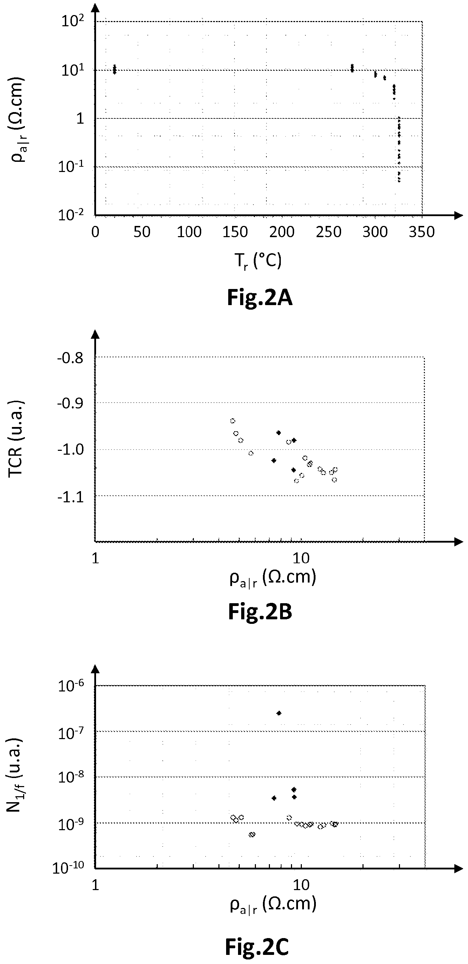

Ainsi, la figure 2A illustre un exemple d'évolution de la résistivité électrique ρ_{a|r} d'un composé de base en VO_{1.8} (ne contenant pas de B et/ou C) en fonction de la température Tᵣ pour une durée Δtᵣ égale à 90 min. Ainsi, la résistivité électrique ρ_{a|r} reste constante et égale à 10 Ω.cm environ jusqu'à la température Tᵣ de 280°C environ. Ensuite, elle présente une forte diminution, en particulier entre 300°C et 325°C.

Par ailleurs, il apparaît que l'évolution de la valeur du coefficient thermique de résistance (TCR, pour *Temperature Coefficient of Resistance*, en anglais) en fonction de la température Tᵣ ne paraît pas être corrélée à celle de la résistivité électrique lorsque la dégradation de la résistivité électrique est liée à l'exposition thermique à Tᵣ pendant Δtᵣ.

Ainsi, la figure 2B illustre les valeurs de différentes mesures du coefficient TCR (en unités arbitraires) d'un composé de base en VOₓ, dont la résistivité électrique est comprise entre 5 Ω.cm et 15 Ω.cm, en fonction de la résistivité électrique ρ_{a|r} après un recuit de 310°C pendant une durée Δtᵣ de 90 min (losanges pleins). Des valeurs du coefficient TCR pour ce même type de composé de base VOₓ sans recuit à la température Tᵣ sont également indiquées (ronds vides). Il apparaît que le coefficient TCR d'un tel composé de base VOₓ reste sensiblement constant, ceci que le composé de base ait été ou non soumis à une exposition thermique de haute température Tᵣ de 310°C.

En revanche, il apparaît que le bruit en 1/f associé à ce type de composé de base VOₓ présente une augmentation qui est corrélée à la diminution de la résistivité électrique ρ_{a|r} lorsque celle-ci est due à l'exposition thermique à la température Tᵣ pendant la durée Δtᵣ.

Ainsi, la figure 2C illustre les valeurs de différentes mesures d'un paramètre N_{1/f} représentatif du bruit en 1/f des composés de base en VOₓ de la fig.2B en fonction de la résistivité électrique ρ_{a|r} après un recuit de 310°C pendant une durée Δtᵣ de 90 min (losanges pleins). Des valeurs de ce paramètre de bruit en 1/f pour ces composés de base VOₓ sans recuit à la température Tᵣ sont également indiquées (ronds vides). Alors que le bruit en 1/f reste sensiblement constant quelle que soit la valeur de la résistivité électrique pour ces composés de base VOₓ sans recuit à Tᵣ, il apparaît qu'un recuit des composés de base VOₓ à une température de 310°C pendant 90 min provoque une augmentation sensible du bruit en 1/f.

Le paramètre N_{1/f} représentatif du bruit en 1/f est estimé ici à partir de l'analyse spectrale d'un courant électrique de référence qui circule dans le matériau sensible. Pour cela, on polarise le matériau sensible avec une source de tension continue (DC) réglée de manière à dissiper le courant de référence dans le matériau sensible. On utilise en outre une source de tension de très faible bruit pour ne pas biaiser la mesure du bruit du matériau sensible. Ainsi le courant de référence est entaché du seul courant de bruit du matériau sensible. Ce courant est alors amplifié par un amplificateur trans-impédance qui délivre un signal de sortie en tension qui est l'image du courant d'entrée. Le signal en tension est échantillonné, numérisé et traité numériquement (transformée de Fourrier) pour obtenir son spectre. L'amplitude du bruit en 1/f peut être obtenue en relevant un point particulier du spectre, par exemple à 1 Hz ou par une méthode de calcul des moindres carrés sur la partie basse fréquence du spectre où la manifestation du bruit en 1/f est la plus marquée.

Aussi, il ressort qu'une exposition d'un composé de base VOₓ amorphe et présentant une résistivité électrique native ρₐ à température ambiante comprise entre 1 Ω.cm et 30 Ω.cm (i.e. forme non stoechiométrique), à une température Tᵣ pendant une durée Δtᵣ telles que sa résistivité électrique ρ_{a|r} chute par rapport à sa valeur native ρₐ, provoque également une dégradation du bruit en 1/f, sans pour autant que le coefficient TCR soit affecté.

Cette augmentation du bruit en 1/f d'un tel composé de base VOₓ peut être la conséquence d'un début de cristallisation du composé, dans laquelle des phases cristallines distinctes apparaissent, qui diffèrent entre elles par la quantité d'oxygène, ces phases cristallines étant alors des formes stoechiométriques. Ainsi, à titre d'exemple, la cristallisation au moins partielle d'un composé de base VOₓ initialement amorphe avec x de l'ordre de 1.8 se traduit par l'apparition de différentes phases cristallines stoechiométriques, parmi lesquelles VO₂ et V₂O₅ (i.e. x=2.5). L'augmentation du bruit en 1/f pourrait ainsi être lié à l'apparition de plusieurs phases cristallines stoechiométriques, différentes entre elles par la quantité d'oxygène, et donc par la perte du caractère homogène de la composition chimique du matériau sensible, et donc de ses propriétés électriques locales.

A ce titre, les figures 3A et 3B illustrent des exemples de spectres Raman d'un composé de base VOx (donc sans B et/ou C ajoutés), initialement amorphe, avec x égal à 1.85 environ, pour différentes expositions à une température Tᵣ pendant une durée Δtᵣ de 90min. Les spectres Raman de la figure 3A sont centrés sur une gamme de déplacement Raman (Raman *shift*, en anglais) allant de 100 à 300 cm⁻¹ environ, et ceux de la figure 3B le sont sur une gamme de déplacement Raman allant de 700 à 950 cm⁻¹ environ. La courbe A₀ correspond au spectre Raman d'un composé VO_{1.85} sans recuit, et la courbe Aₛ à celle du support sur lequel repose le composé en question. Les courbes A₁, A₂, A₃ et A₄ correspondent au spectre Raman du composé VO_{1.85} ayant subi une exposition pendant 90min aux températures Tᵣ de 300°C, 310°C, 320°C et 330°C, respectivement. Il apparaît que le pic à 149 cm⁻¹ apparaît et augmente en intensité lorsque la température Tᵣ augmente, ce pic étant associé à la phase cristalline stoechiométrique V₂O₅ (x=2.5). De même, les pics à 197 cm⁻¹ et 224 cm⁻¹ associés à la phase cristalline stoechiométrique VO₂ apparaissent et augmente en intensité avec la température Tᵣ. Corrélativement, le pic à 860 cm⁻¹ associé au caractère amorphe du composé de base diminue à mesure que la température Tᵣ augmente.

Ainsi, il apparaît que l'exposition à haute température d'un composé de base réalisé à partir de VOₓ et ne contenant pas de bore et/ou de carbone, initialement amorphe, et dont la résistivité électrique native est comprise entre 1 Ω.cm et 30 Ω.cm conduit à une cristallisation au moins partielle du matériau sensible, qui se traduit par une chute de sa résistivité électrique et par une augmentation du bruit en 1/f. Autrement dit, la résistivité électrique à température ambiante est un paramètre représentatif du caractère amorphe ou non du composé, ainsi que du bruit en 1/f. Aussi, par le fait d'ajouter une quantité suffisante de bore et/ou de carbone dans le composé de base comme élément chimique additionnel pour obtenir un composé modifié, il est possible de limiter la cristallisation voire de repousser le seuil de cristallisation du composé modifié, et donc de limiter voire écarter la dégradation du bruit en 1/f.

Comme mentionné précédemment, le procédé de fabrication comporte alors une étape d'ajout de bore et/ou de carbone comme un élément chimique additionnel dans le composé de base, de manière à obtenir un composé modifié. Celui-ci présente une résistivité électrique native sensiblement égale à celle du composé de base. Elle est comprise entre 1 Ω.cm et 30 Ω.cm, ce qui correspond à une quantité d'oxygène x non stoechiométrique. Ainsi, on détermine la quantité de bore et/ou de carbone à ajouter dans le composé de base de sorte que le composé ainsi modifié, lorsqu'il est exposé à la température Tᵣ pendant la durée Δtᵣ déterminées préalablement, présente une résistivité électrique ρ_{a|r} supérieure ou égale à sa valeur native. Ainsi, on limite la cristallisation partielle du composé modifié faisant apparaître des phases cristallines stoechiométriques différentes entre elles par la quantité d'oxygène x, et on limite également la dégradation du bruit en 1/f. Ainsi, on améliore la stabilité thermique des propriétés du matériau sensible lorsqu'il sera ultérieurement exposé à la température Tᵣ pendant la durée Δtᵣ.

Un tel matériau sensible est alors particulièrement avantageux dans le cadre d'un procédé de fabrication collective d'une matrice de microbolomètres d'un dispositif de détection du rayonnement électromagnétique. En effet, lors d'une étape d'exposition thermique, le champ de température peut présenter des inhomogénéités spatiales au sein d'un réacteur de dépôt de couches minces ou d'un four de recuit, ce qui peut se traduire par une dispersion des propriétés électriques des microbolomètres. Ainsi, par l'utilisation du matériau sensible à quantité suffisante de bore et/ou de carbone, les microbolomètres présentent une meilleure stabilité thermique lors de l'exposition thermique à la température Tᵣ, réduisant ainsi la dispersion des propriétés électriques des microbolomètres.

Par ailleurs, le matériau sensible peut comporter en outre un métal de transition appartenant à la période 4 du tableau périodique des éléments, c'est-à-dire du scandium Sc, du titane Ti, du chrome Cr, du manganèse Mn, du fer Fe, du cobalt Co, du nickel Ni, du cuivre Cu et/ou du zinc Zn. Il peut également comporter d'autres éléments chimiques, par exemple l'yttrium Y, le niobium Nb, le molybdène Mo, le tantale Ta, le tungstène W, entre autres.

La figure 4A illustre des exemples d'évolution de la résistivité électrique ρ_{a|r} à température ambiante du matériau sensible en fonction de la température Tᵣ d'exposition thermique, pour différentes quantités de bore ajouté, pour une durée Δtᵣ de 90min. Ces exemples mettent ainsi en évidence l'augmentation de la plage de stabilité thermique que présente le matériau sensible lorsqu'il comporte une quantité suffisante de bore.

Dans ces exemples, l'échantillon de matériau sensible VOₓ a été réalisé par une technique de dépôt par pulvérisation par faisceau d'ions (IBS, pour *Ion Beam Sputtering* en anglais), par exemple en pulvérisant une cible de vanadium sous atmosphère oxydante à une pression partielle d'oxygène par exemple de l'ordre de 10⁻⁴ Torr environ. Les échantillons de matériau sensible VOₓB_{y} ont été obtenus par implantation de bore dans un matériau VOₓ réalisé préalablement par pulvérisation IBS. D'autres techniques de réalisation du matériau sensible VOₓB_{y} peuvent être utilisées. La résistivité électrique ρ_{a|r} du matériau sensible est mesurée à température ambiante, ici à 30°C, après exposition du matériau sensible pendant 90min à une température Tᵣ comprise entre 230°C et 390°C.

Ainsi, la courbe C1 illustre l'évolution de la résistivité électrique ρ_{a|r} en fonction de la température Tᵣ pour un matériau sensible constitué d'oxyde de vanadium VOₓ ne contenant pas d'élément chimique additionnel B, C. Dans cet exemple, la valeur x de la quantité d'oxygène, à savoir le rapport du nombre d'atomes d'oxygène sur celui de vanadium, est égale à 1.94. La courbe C1 montre que la résistivité électrique ρ_{a|r} du VOₓ sans bore ajouté présente une transition à une température Tₜₕ₁, ici de l'ordre de 250°C : en effet, jusqu'à la valeur seuil Tₜₕ₁, la résistivité électrique ρ_{a|r} est sensiblement constante et est au moins égale à 50% de la valeur native ρₐ, ici de l'ordre de 23Ω.cm environ. Puis, au-delà de la valeur seuil Tₜₕ₁, la résistivité électrique ρ_{a|r} diminue fortement à mesure que la température Tᵣ augmente. Elle perd ainsi environ trois ordres de grandeur après que le matériau VOₓ ait été exposé à 310°C pendant 90min.

Les courbes C₂ à C₅ illustrent l'évolution de la résistivité électrique ρ_{a|r} en fonction de la température Tᵣ pour un matériau sensible de type VOₓB_{y}, où la quantité y de bore, à savoir le rapport du nombre d'atomes de bore sur celui de vanadium, est ici égale à 0.012 (C2), 0.024 (C3), 0.048 (C4), et 0.097 (C5), ce qui correspond respectivement à une proportion atomique de bore égale à 0.4% (C2), 0.8% (C3), 1.6% (C4) et 3.2% (C5). La quantité x d'oxygène reste identique à celle de la courbe C1. Il apparaît que la température seuil Tₜₕ, à laquelle la résistivité électrique ρ_{a|r} est au moins égale à 50% de la valeur native ρₐ, augmente à mesure qu'augmente la quantité y de bore dans le matériau sensible. Ainsi, elle passe de 275°C pour le VOₓB_{0.012} et 277°C pour le VOₓB_{0.024}, à 290°C pour le VOₓB_{0.048}, et est supérieure à 370°C pour le VOₓB_{0.097}.

Le tableau ci-dessous rassemble les valeurs seuil Tₜₕ de température d'exposition thermique en fonction des différentes valeurs y de la quantité de bore dans le matériau sensible :

| Quantité y de bore ajouté | | | | Température seuil Tₜₕ |
|---|---|---|---|---|
| | C5 : | VOₓB_{y} | avec y=0.097 | > 370°C |
| | C4 : | VOₓB_{y} | avec y=0.048 | 290°C |
| | C3 : | VOₓB_{y} | avec y=0.024 | 277°C |
| | C2 : | VOₓB_{y} | avec y=0.012 | 275°C |
| | C1 : | VOₓ | avec x=1.94 ; y=0 | 257°C |

Ainsi, la quantité efficace de bore pour que le matériau sensible présente au moins 50% de sa valeur native après avoir été exposé à 310°C pendant 90min est ici supérieure à 0.048 et inférieure à 0.097. Aussi, il est particulièrement avantageux que le matériau sensible à base d'oxyde de vanadium comporte une quantité y de bore au moins égale à 0.097, pour qu'il présente une stabilité thermique importante lui permettant d'être exposé à des températures allant jusqu'à 370°C pendant au plus 90min, tout en ayant ses propriétés électriques préservées.

De plus, il apparaît que le matériau sensible VOₓB_{0.097} présente une variation relative de la résistivité électrique ρ_{a|r} en fonction de la température Tᵣ particulièrement faible, ici inférieure à 0.2%/°C, lorsque la température d'exposition thermique est inférieure ou égale à sa valeur seuil Tₜₕ. Cela permet alors de limiter la dispersion de propriétés électriques des microbolomètres issue d'éventuelles inhomogénéités spatiales du champ de température au sein du réacteur de dépôt ou du four de recuit.

Par ailleurs, il est possible de réaliser un matériau sensible VOₓB_{y} à partir d'une cible de pulvérisation vanadium-bore (cible alliée), et non pas par implantation de bore dans un composé de base VOₓ préalablement obtenu. Les inventeurs ont remarqué qu'un tel matériau sensible VOₓB_{y}, ayant une quantité y de bore au moins égale à 0.086, présente une stabilité thermique importante lui permettant d'être exposé à une température de 370°C pendant 90min, tout en ayant ses propriétés électriques préservées en termes de résistivité électrique à température ambiante. Une telle quantité y de bore dans le matériau sensible peut être obtenue avec une cible alliée ayant 10% de bore. Notons par ailleurs qu'une cible alliée ayant 5% de bore permet d'obtenir un matériau sensible VOₓB_{y} ayant une quantité y de bore de 0.043. Cependant, un tel matériau sensible ne présente pas une stabilité thermique de sa résistivité électrique après exposition à une température de 370°C pendant 90min.

La figure 4B illustre des exemples d'évolution de la résistivité électrique ρ_{a|r} à température ambiante du matériau sensible en fonction de la température Tᵣ d'exposition thermique, pour différentes quantités de carbone ajouté, pour une durée Δtᵣ de 90min. Ces exemples mettent ainsi en évidence l'augmentation de la plage de stabilité thermique que présente le matériau sensible lorsqu'il comporte une quantité suffisante de carbone.

Dans ces exemples, l'échantillon du matériau sensible VOₓ est obtenu de manière identique à celle décrite précédemment. Les échantillons du matériau sensible VOₓC_{z} ont été obtenus de manière similaire, c'est-à-dire par implantation de carbone dans un matériau VOₓ obtenu préalablement par pulvérisation IBS.

La courbe C1 est identique à celle décrite précédemment. Les courbes C2' à C5' illustrent l'évolution de la résistivité électrique ρ_{a|r} en fonction de la température Tᵣ pour un matériau sensible de type VOₓC_{z}, où la quantité z de carbone, c'est-à-dire le nombre d'atomes de carbone sur celui de vanadium, est ici égale à 0.008 (C2'), 0.016 (C3'), 0.033 (C4'), et 0.063 (C5'), ce qui correspond respectivement à une proportion atomique de carbone égal à 0.27% (C2'), 0.53% (C3'), 1.1% (C4') et 2.1% (C5'). La quantité x d'oxygène reste identique à celle de la courbe C1. Il apparaît que la température seuil Tₜₕ, à laquelle la résistivité électrique ρ_{a|r} est au moins égale à 50% de la valeur native ρₐ, augmente à mesure qu'augmente la quantité z de carbone dans le matériau sensible. Ainsi, elle passe de 290°C pour le VOₓC_{0.008} et 282°C pour le VOₓC_{0.016}, à 294°C pour le VOₓC_{0.033}, et à 316°C pour le VOₓC_{0.063}.

Le tableau ci-dessous rassemble les valeurs seuil Tₜₕ de température d'exposition thermique en fonction des différentes valeurs z de la quantité de carbone contenu dans le matériau sensible :

| Quantité z de carbone ajouté | | | Température seuil Tₜₕ |
|---|---|---|---|
| C5' : | VOₓC_{z} | avec z=0.063 | 316°C |
| C4' : | VOₓC_{z} | avec z=0.033 | 294°C |
| C3' : | VOₓC_{z} | avec z=0.016 | 282°C |
| C2' : | VOₓC_{z} | avec z=0.008 | 290°C |
| C1 : | VOₓ | avec x=1.94 ; z=0 | 257°C |

Ainsi, la quantité efficace de carbone pour que le matériau sensible présente au moins 50% de sa valeur native après avoir été exposé à 310°C pendant 90min est ici supérieure à 0.033 et inférieure à 0.063. Aussi, il est particulièrement avantageux que le matériau sensible à base d'oxyde de vanadium comporte au moins une quantité z de carbone au moins égale à 0.063, pour qu'il présente une stabilité thermique importante lui permettant d'être exposé à des températures au plus égales à 316°C pendant au plus 90min, tout en ayant ses propriétés électriques préservées.

De plus, il apparaît que le matériau sensible VOₓC_{0.063} présente une variation relative de la résistivité électrique ρ_{a|r} en fonction de la température Tᵣ particulièrement faible, ici inférieure à 1.2%/°C, lorsque la température d'exposition thermique est inférieure ou égale à sa valeur seuil Tₜₕ. Cela permet alors de limiter la dispersion de propriétés électriques des microbolomètres issue d'éventuelles inhomogénéités spatiales du champ de température au sein du réacteur de dépôt ou du four de recuit.

Ainsi, un aspect de l'invention porte sur un procédé de fabrication d'au moins un microbolomètre 10, et de manière avantageuse, sur un procédé de fabrication collective d'une matrice de bolomètres 10 d'un dispositif de détection 1.

Le procédé de fabrication comporte au moins une étape au cours de laquelle le matériau sensible 15 des microbolomètres 10 est soumis à une température Tᵣ pendant la durée Δtᵣ.

Les valeurs de la température Tᵣ et de la durée Δtᵣ sont déterminées de telles sorte que le composé de base du matériau sensible 15 (donc sans l'élément chimique additionnel) présente une résistivité électrique ρ_{a|r} au moins inférieure à 50% de sa valeur native ρₐ. Il s'agit en particulier de la température et de la durée auxquelles le matériau sensible sera ultérieurement soumis lors des étapes ultérieures de fabrication du microbolomètre.

Le procédé de fabrication comporte alors une étape préalable de détermination de la valeur efficace de quantité d'au moins un élément chimique additionnel choisi parmi le bore et le carbone à partir de laquelle le matériau sensible 15, ayant subi une exposition à la température Tᵣ pendant la durée Δtᵣ, présente une résistivité électrique ρ_{a|r} à température ambiante, au moins égale à 50% de sa valeur native ρₐ.

Lors d'une étape de réalisation de la membrane absorbante, le matériau sensible 15 est déposé en couche mince sur la couche support 20, laquelle repose sur une couche sacrificielle. Il comporte une quantité suffisante d'au moins l'un desdits éléments chimiques additionnels B, C, c'est-à-dire une quantité de bore et/ou de carbone supérieure ou égale à la valeur efficace déterminée. Il peut présenter une épaisseur de l'ordre de quelques dizaines à quelques centaines de nanomètres, par exemple comprise entre 10nm et 500nm, par exemple égale à 80nm.

Le matériau sensible 15 peut être obtenu par implantation ionique d'au moins l'un des éléments chimiques additionnels B, C dans une couche mince du composé de base (oxyde de vanadium VOₓ) préalablement déposée. La température peut être la température ambiante. L'atmosphère est oxydante lors de la réalisation de la couche mince de VOₓ et la pression partielle d'oxygène peut être de l'ordre de 10⁻⁵ à 10⁻⁴ Torr environ, par exemple égale à 6.10⁻⁵ Torr, selon la valeur native souhaitée de la résistivité électrique du matériau sensible. La valeur de la pression partielle d'oxygène ainsi que la teneur en élément chimique additionnel de la cible peuvent être issues de courbes d'étalonnage préalablement obtenues. D'autres techniques de réalisation peuvent être utilisées, telles que le dépôt ALD (*Atomic Layer Deposition*), ou le dépôt du matériau sensible par pulvérisation cathodique en mode réactif avec une cible métallique ou en oxyde de vanadium, suivie d'une implantation de l'élément chimique additionnel.

Il est possible de recouvrir ensuite le composé de base de la couche de protection en nitrure de silicium, d'une épaisseur par exemple de 10nm déposée par PECVD. L'addition de l'élément chimique, par exemple le bore, peut ensuite être effectuée en réalisant plusieurs implantations successives. Ainsi, pour une couche mince du composé de base VOₓ de 80nm d'épaisseur recouverte de la couche de protection de SiN de 10nm d'épaisseur, trois implantations successives de bore peuvent être effectuées, à partir de doses de l'ordre de 10¹⁶ at/cm² et pour des énergies d'implantations de l'ordre de la dizaine à quelques dizaines de KeV. D'autres techniques de réalisation du matériau sensible peuvent être utilisées, voire d'autres variantes des techniques de dépôt mentionnées précédemment. Ainsi, pour l'addition de carbone, il est possible de pulvériser une cible contenant uniquement du vanadium, sous atmosphère oxydante contenant du CO ou du CO₂.

Le procédé de fabrication comporte ensuite au moins une étape à laquelle le matériau sensible est exposé à une température supérieure à la température ambiante, et inférieure ou égale à Tᵣ pendant une durée inférieure ou égale à Δtᵣ. La température d'exposition peut être égale à Tᵣ et être comprise entre 300°C et 400°C, et la durée peut être égale à Δtᵣ et être de l'ordre de quelques minutes à quelques heures. Cette étape d'exposition thermique peut être effectuée sous atmosphère inerte ou sous vide.

Il peut ainsi s'agir du dépôt de la couche mince de protection 22 en nitrure de silicium par PECVD, le dépôt d'au moins l'une des couches minces formant la structure d'encapsulation qui définit la cavité hermétique, l'élimination de la couche sacrificielle ou des couches sacrificielles utilisées pour réaliser la membrane suspendue ou la structure d'encapsulation, voire l'activation d'un matériau getter disposé dans ladite cavité hermétique.

Des modes de réalisation particuliers viennent d'être décrits. Différentes variantes et modifications apparaîtront à l'homme du métier.

## Revendications

1. Procédé de fabrication d'au moins un microbolomètre (10) comportant un matériau sensible (15) permettant d'au moins limiter une dégradation d'un bruit dudit matériau sensible (15),
• ledit matériau sensible (15) étant formé d'un premier composé à base d'oxyde de vanadium (VOₓ) et d'au moins un élément chimique additionnel choisi parmi le bore (B), le carbone (C), à l'exception de l'azote (N),
• le procédé comportant les étapes suivantes :
∘ une étape de réalisation du matériau sensible en couche mince ;
∘ une étape d'exposition du matériau sensible à une température Tᵣ supérieure à la température ambiante, pendant une durée Δtᵣ, cette étape d'exposition thermique étant effectuée ultérieurement à l'étape de réalisation du matériau sensible,
▪ la température Tᵣ et la durée Δtᵣ étant telles que ledit premier composé, étant amorphe et présentant une valeur native de résistivité électrique à température ambiante comprise entre 1 Ω.cm et 30 Ω.cm, ayant subi une étape d'exposition à la température Tᵣ pendant la durée Δtᵣ, présente une résistivité électrique à température ambiante inférieure à 50% de sa valeur native ;
• le procédé comportant en outre les étapes suivantes :
i. détermination d'une quantité dite efficace non nulle de l'élément chimique additionnel (B, C) ajouté audit premier composé, formant ainsi un composé modifié, à partir de laquelle le composé modifié, ayant subi une étape d'exposition à la température Tᵣ pendant la durée Δtᵣ, présente une résistivité électrique ρ_{a|r} à température ambiante, supérieure ou égale à 50% de sa valeur native ρₐ ;
ii. lors de ladite étape de réalisation du matériau sensible (15) en couche mince, celui-ci est formé dudit composé modifié ayant une quantité de l'élément chimique additionnel (B, C) supérieure ou égale à la quantité efficace préalablement déterminée, le matériau sensible (15) étant amorphe, présentant une valeur native ρₐ de résistivité électrique à température ambiante comprise entre 1 Ω.cm et 30 Ω.cm, et une composition chimique homogène ;
iii. de sorte que, à la suite de ladite étape d'exposition du matériau sensible (15) à la température Tᵣ pendant la durée Δtᵣ, ledit matériau sensible (15) présente alors un bruit dont la dégradation a été au moins limitée.

2. Procédé de fabrication selon la revendication 1, dans lequel l'étape d'exposition du matériau sensible (15) comprend une étape de dépôt d'une couche de protection (22) recouvrant le matériau sensible.

3. Procédé de fabrication selon la revendication 1 ou 2, dans lequel l'étape d'exposition du matériau sensible (15) comprend une étape de dépôt d'une couche d'encapsulation transparente au rayonnement électromagnétique à détecter destinée à définir une cavité dans laquelle est situé le microbolomètre.

4. Procédé de fabrication selon l'une quelconque des revendications 1 à 3, dans lequel la température Tᵣ est supérieure ou égale à 280°C, voire égale à 310°C à 5°C près.

5. Procédé de fabrication selon l'une quelconque des revendications 1 à 4, dans lequel la durée Δtᵣ est supérieure ou égale à 90min.

6. Procédé de fabrication selon l'une quelconque des revendications 1 à 5, dans lequel le matériau sensible (15) est réalisé à une température inférieure à la température Tᵣ.

7. Microbolomètre (10) comportant un matériau sensible (15) en un premier composé à base d'oxyde de vanadium (VOₓ) et en au moins un élément chimique additionnel choisi parmi le bore (B) et le carbone (C), à l'exception de l'azote (N), **caractérisé en ce que** le matériau sensible (15) :
o est amorphe,
o présente une résistivité électrique à température ambiante comprise entre 1 Ω.cm et 30 Ω.cm,
o une composition chimique homogène, et
o une quantité de bore, définie comme le rapport du nombre d'atomes de bore sur celui de vanadium, au moins égale à 0.086, et/ou une quantité de carbone, définie comme le rapport du nombre d'atomes de carbone sur celui de vanadium, au moins égale à 0.063.

8. Microbolomètre (10) selon la revendication 7, dans lequel la quantité d'oxygène, définie comme le rapport du nombre d'atomes d'oxygène sur celui de vanadium, est comprise entre 1.42 et 1.94, à plus ou moins 0.05 près.

9. Microbolomètre (10) selon la revendication 7 ou 8, dans lequel le matériau sensible (15) est recouvert par une couche de protection (22) en nitrure de silicium.

10. Dispositif de détection (1) d'un rayonnement électromagnétique, comportant une matrice de microbolomètres selon l'une quelconque des revendications 7 à 9, les microbolomètres (10) étant disposés dans au moins une cavité hermétique délimitée par une structure d'encapsulation transparente au rayonnement électromagnétique à détecter, la structure d'encapsulation comportant au moins une couche réalisée en silicium amorphe.

11. Dispositif de détection (1) selon la revendication 10, comportant un matériau getter situé dans la cavité hermétique.

## Patentansprüche

1. Verfahren zur Herstellung mindestens eines Mikrobolometers (10), das ein empfindliches Material (15) beinhaltet, das es ermöglicht, eine Verschlechterung eines Rauschens des empfindlichen Materials (15) mindestens zu begrenzen,
• wobei das empfindliche Material (15) aus einer ersten Verbindung auf Basis von Vanadiumoxid (VOₓ) und mindestens einem zusätzlichen chemischen Element, das unter Bor (B), Kohlenstoff (C) gewählt ist, mit Ausnahme von Stickstoff (N), gebildet wird,
• wobei das Verfahren die folgenden Schritte umfasst:
∘ einen Schritt des Ausführens des empfindlichen Materials als dünne Schicht;
∘ einen Schritt der Exposition des empfindlichen Materials gegenüber einer Temperatur Tᵣ, die über der Umgebungstemperatur liegt, während einer Dauer Δtᵣ, wobei dieser Schritt der thermischen Exposition im Anschluss an den Schritt des Ausführens des empfindlichen Materials durchgeführt wird,
▪ wobei die Temperatur Tᵣ und die Dauer Δtᵣ dergestalt sind, dass die erste Verbindung, da sie amorph ist und einen nativen Wert des spezifischen Widerstands bei Umgebungstemperatur zwischen 1 Ω.cm und 30 Ω.cm aufweist, da sie einem Schritt der Exposition gegenüber der Temperatur Tᵣ während der Dauer Δtᵣ unterzogen wurde, einen spezifischen Widerstand bei Umgebungstemperatur von weniger als 50 % ihres nativen Werts aufweist,
• wobei das Verfahren ferner die folgenden Schritte umfasst:
i. Bestimmen einer sogenannten wirksamen Menge ungleich null des zusätzlichen chemischen Elements (B, C), das der ersten Verbindung zugegeben wird und somit eine modifizierte Verbindung bildet, ab der die modifizierte Verbindung, da sie einem Schritt der Exposition gegenüber einer Temperatur Tᵣ während der Dauer Δtᵣ unterzogen wurde, einen spezifischen Widerstand ρ_{a|r} bei Umgebungstemperatur aufweist, der größer als oder gleich 50 % ihres nativen Werts ρₐ ist;
ii. bei dem Schritt des Ausführens des empfindlichen Materials (15) als dünne Schicht wird dieses aus der modifizierten Verbindung gebildet, die eine Menge des zusätzlichen chemischen Elements (B, C) hat, die größer als oder gleich der zuvor bestimmten wirksamen Menge ist, wobei das empfindliche Material (15) amorph ist, einen nativen Wert ρₐ des spezifischen Widerstands bei Umgebungstemperatur zwischen 1 Ω.cm und 30 Ω.cm und eine homogene chemische Zusammensetzung aufweist,
iii. so dass, nach dem Schritt der Exposition des empfindlichen Materials (15) gegenüber der Temperatur Tᵣ während der Dauer Δtᵣ, das empfindliche Material (15) daraufhin ein Rauschen aufweist, dessen Verschlechterung mindestens begrenzt worden ist.

2. Herstellungsverfahren nach Anspruch 1, bei dem der Schritt der Exposition des empfindlichen Materials (15) einen Schritt des Abscheidens einer Schutzschicht (22) umfasst, die das empfindliche Material überzieht.

3. Herstellungsverfahren nach Anspruch 1 oder 2, bei dem der Schritt der Exposition des empfindlichen Materials (15) einen Schritt des Abscheidens einer für die zu detektierende elektromagnetische Strahlung durchlässigen Kapselungsschicht umfasst, die dazu bestimmt ist, einen Hohlraum zu bilden, in dem sich das Mikrobolometer befindet.

4. Herstellungsverfahren nach einem der Ansprüche 1 bis 3, bei dem die Temperatur Tᵣ größer als oder gleich 280 °C oder sogar gleich 310 °C ist, auf 5 °C genau.

5. Herstellungsverfahren nach einem der Ansprüche 1 bis 4, bei dem die Dauer Δtᵣ größer als oder gleich 90 min ist.

6. Herstellungsverfahren nach einem der Ansprüche 1 bis 5, bei dem das empfindliche Material (15) bei einer Temperatur ausgeführt wird, die geringer als die Temperatur Tᵣ ist.

7. Mikrobolometer (10), das ein empfindliches Material (15) aus einer ersten Verbindung auf Basis von Vanadiumoxid (VOₓ) und aus mindestens einem zusätzlichen chemischen Element, das unter Bor (B) und Kohlenstoff (C) gewählt ist, mit Ausnahme von Stickstoff (N), beinhaltet, **dadurch gekennzeichnet, dass** das empfindliche Material (15):
∘ amorph ist,
∘ einen spezifischen Widerstand bei Umgebungstemperatur zwischen 1 Ω.cm und 30 Ω.cm,
∘ eine homogene Zusammensetzung und
∘ eine Bormenge, definiert als das Verhältnis der Anzahl der Boratome zu der von Vanadium, von mindestens 0,086 und/oder eine Kohlenstoffmenge, definiert als das Verhältnis der Kohlenstoffatome zu der von Vanadium, von mindestens 0,063 aufweist.

8. Mikrobolometer (10) nach Anspruch 7, bei dem die Sauerstoffmenge, definiert als das Verhältnis der Anzahl der Sauerstoffatome zu der von Vanadium, zwischen 1,42 und 1,94 beträgt, auf plus oder minus 0,05 genau.

9. Mikrobolometer (10) nach Anspruch 7 oder 8, bei dem das empfindliche Material (15) mit einer Schutzschicht (22) aus Siliciumnitrid überzogen ist.

10. Detektionsvorrichtung (1) zur Detektion einer elektromagnetischen Strahlung, die eine Matrix aus Mikrobolometern nach einem der Ansprüche 7 bis 9 beinhaltet, wobei die Mikrobolometer (10) in mindestens einem hermetischen Hohlraum angeordnet sind, der durch eine für die zu detektierende Strahlung durchlässige Kapselungsstruktur begrenzt wird, wobei die Kapselungsstruktur mindestens eine aus amorphem Silicium ausgeführte Schicht beinhaltet.

11. Detektionsvorrichtung (1) nach Anspruch 10, die ein Getter-Material beinhaltet, das sich in dem hermetischen Hohlraum befindet.

## Claims

1. Process for manufacturing at least one microbolometer (10) comprising a sensitive material (15) for at least limiting noise degradation of said sensitive material (15),
• said sensitive material (15) being formed of a first compound based on vanadium oxide (VOₓ) and at least one additional chemical element chosen from boron (B), carbon (C), with the exception of nitrogen (N),
• the process comprising the following steps:
∘ a step of producing the sensitive material in a thin layer;
∘ a step of exposing the sensitive material to a temperature Tᵣ greater than the ambient temperature, for a duration Δtᵣ, this thermal exposure step being performed after the step of producing the sensitive material,
▪ the temperature Tᵣ and the duration Δtᵣ being such that said first compound, being amorphous and having a native electrical resistivity value at ambient temperature of between 1 Ω.cm and 30 Ω.cm, having undergone a step of exposure to the temperature Tᵣ for the duration Δtᵣ, has an electrical resistivity at ambient temperature less than 50% of its native value;
• the process furthermore comprising the following steps:
i. determining a non-zero what is called effective amount of the additional chemical element (B, C) added to said first compound, thus forming a modified compound, starting from which the modified compound, having undergone a step of exposure to the temperature Tᵣ for the duration Δtᵣ, has an electrical resistivity ρ_{a|r} at ambient temperature greater than or equal to 50% of its native value ρₐ;
ii. in said step of producing the sensitive material (15) in a thin layer, the latter is formed of said modified compound having an amount of the additional chemical element (B, C) greater than or equal to the effective amount determined beforehand, the sensitive material (15) being amorphous, having a native electrical resistivity value ρₐ at ambient temperature of between 1 Ω.cm and 30 Ω.cm, and a homogeneous chemical composition;
iii. such that, following said step of exposing the sensitive material (15) to the temperature Tᵣ for the duration Δtᵣ, said sensitive material (15) then has a noise whose degradation has been at least limited.

2. Manufacturing process according to Claim 1, wherein the step of exposing the sensitive material (15) comprises a step of depositing a protective layer (22) covering the sensitive material.

3. Manufacturing process according to Claim 1 or 2, wherein the step of exposing the sensitive material (15) comprises a step of depositing an encapsulation layer transparent to the electromagnetic radiation to be detected and intended to define a cavity in which the microbolometer is located.

4. Manufacturing process according to any one of Claims 1 to 3, wherein the temperature Tᵣ is greater than or equal to 280°C, or even equal to 310°C, to within 5°C.

5. Manufacturing process according to any one of Claims 1 to 4, wherein the duration Δtᵣ is greater than or equal to 90 min.

6. Manufacturing process according to any one of Claims 1 to 5, wherein the sensitive material (15) is produced at a temperature less than the temperature Tᵣ.

7. Microbolometer (10) comprising a sensitive material (15) made of a first compound based on vanadium oxide (VOₓ) and of at least one additional chemical element chosen from boron (B) and carbon (C), with the exception of nitrogen (N), **characterized in that** the sensitive material (15):
∘ is amorphous,
∘ has an electrical resistivity at ambient temperature of between 1 Ω.cm and 30 Ω.cm,
∘ a homogeneous chemical composition, and
∘ an amount of boron, defined as the ratio of the number of boron atoms to that of vanadium, at least equal to 0.086, and/or an amount of carbon, defined as the ratio of the number of carbon atoms to that of vanadium, at least equal to 0.063.

8. Microbolometer (10) according to Claim 7, wherein the amount of oxygen, defined as the ratio of the number of oxygen atoms to that of vanadium, is between 1.42 and 1.94, to within plus or minus 0.05.

9. Microbolometer (10) according to Claim 7 or 8, wherein the sensitive material (15) is covered by a protective layer (22) of silicon nitride.

10. Device (1) for detecting electromagnetic radiation, comprising an array of microbolometers according to any one of Claims 7 to 9, the microbolometers (10) being arranged in at least one hermetic cavity delimited by an encapsulation structure transparent to the electromagnetic radiation to be detected, the encapsulation structure comprising at least one layer made of amorphous silicon.

11. Detection device (1) according to Claim 10, comprising a getter material located in the hermetic cavity.
